(19) Europäisches Patentamt
European Patent Office
Office européen des brevets

(11) EP 3 823 938 B1

(12) # FASCICULE DE BREVET EUROPEEN

(45) Date de publication et mention de la délivrance du brevet:
**06.09.2023 Bulletin 2023/36**

(21) Numéro de dépôt: **19753171.8**

(22) Date de dépôt: **17.07.2019**

(51) Classification Internationale des Brevets (IPC):
***C03C 25/26*** *(2018.01)* ***C03C 25/321*** *(2018.01)*
***C09J 103/02*** *(2006.01)* ***D04H 1/587*** *(2012.01)*
***D04H 1/64*** *(2012.01)*

(52) Classification Coopérative des Brevets (CPC):
**C03C 25/26; C03C 25/321; C09J 103/02; D04H 1/587; D04H 1/64**

(86) Numéro de dépôt international:
**PCT/FR2019/051804**

(87) Numéro de publication internationale:
**WO 2020/016532 (23.01.2020 Gazette 2020/04)**

(54) **COMPOSITION DE LIANT POUR LAINE MINERALE**

BINDEMITTELZUSAMMENSETZUNG FÜR MINERALWOLLE

BINDER COMPOSITION FOR MINERAL WOOL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2018 FR 1856750**

(43) Date de publication de la demande:
**26.05.2021 Bulletin 2021/21**

(73) Titulaire: **SAINT-GOBAIN ISOVER**
**92400 Courbevoie (FR)**

(72) Inventeurs:
- **CHENAL, Marion**
  **93100 MONTREUIL (FR)**
- **SALOMON, Pierre**
  **92400 COURBEVOIE (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2010/029266**
**WO-A1-2013/014399**
**WO-A1-2013/021112**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 823 938 B1

## Description

La présente invention concerne une composition de liant pour la fabrication de produits isolants à base de laine minérale, en particulier de laine de verre ou de roche, contenant des sucres hydrogénés, au moins un acide polycarboxylique et de l'isosorbide.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on vaporise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants sont remplacées de plus en plus par des produits issus de sources renouvelables et n'émettant pas, ou très peu, de formaldéhyde, composé considéré comme pouvant nuire à la santé humaine.

Il est ainsi connu, par exemple de US 2011/0223364, de lier des fibres minérales avec des compositions aqueuses d'encollage exemptes de formaldéhyde contenant, en tant que réactifs thermoréticulables, des hydrates de carbone et des acides polycarboxyliques.

Les compositions d'encollage à base de sucres réducteurs présentent toutefois l'inconvénient de donner lieu à des réactions de coloration (caramélisation, réaction de Maillard) qui rendent difficile, voire impossible, l'obtention de produits de couleur claire.

La Demanderesse a proposé dans ses demandes WO 2010/029266 et WO 2013/014399 des liants à base, non pas de sucres réducteurs, mais de sucres hydrogénés, également appelés alcools de sucres. Ces réactifs ont une stabilité thermique considérablement plus élevée que les sucres réducteurs et ne donnent pas lieu aux réactions de Maillard et/ou de caramélisation. Ils forment avec les polyacides et notamment avec l'acide citrique, par thermodurcissement un réseau polyester dense, infusible et insoluble.

Les produits d'isolation à base de laine minérale liée par cette nouvelle génération de liants « verts », ne présentent toutefois pas les mêmes performances mécaniques que les produits de laine minérale liée par les résines phénoliques.

Un des aspects peu satisfaisants des produits d'isolation à base de laine minérale liée par des liants contenant des sucres hydrogénés est la capacité des produits de faible masse volumique, dits « produits légers », à reprendre leur volume après une compression mécanique importante et prolongée, réalisée en vue de l'emballage et du transport des produits. Cette capacité du produit comprimé à retrouver son épaisseur après l'arrêt de la contrainte de compression est appelée « reprise en épaisseur » (en anglais *thickness recovery*).

La reprise en épaisseur directement après fabrication des produits à base de liants biosourcés est comparable à celle des produits liés par des résines phénoliques. Après plusieurs semaines ou mois de conservation à l'état comprimé, on constate toutefois une différence importante entre ces deux types de produits : la reprise en épaisseur des laines minérales liées par des liants verts à base de sucres hydrogénés est inférieure de 20 à 40 % à celle des laines minérales liées par des résines phénoliques. Autrement dit, on constate une importante perte d'élasticité du produit à l'état comprimé dont les mécanismes ne sont pas tout à fait compris à l'heure actuelle.

Au cours de ses recherches visant à améliorer les propriétés mécaniques des produits d'isolation à base de laine minérale encollée avec des liants biosourcés incolores ou peu colorés, c'est-à-dire fabriqués à partir de sucres hydrogénés, la Demanderesse a constaté avec surprise qu'il était possible d'améliorer de manière spectaculaire la reprise en épaisseur, après compression prolongée des produits, en associant de l'isosorbide aux sucres hydrogénés.

Cet effet d'amélioration de la reprise d'épaisseur est « dose-dépendant », c'est-à-dire pour les faibles quantités d'isosorbide il est d'autant plus fort que le rapport isosorbide/polyol (sucre hydrogéné ou non-hydrogéné) est important. La Demanderesse a toutefois constaté que cet effet arrivait à saturation pour un rapport pondéral isosorbide/sucre voisin de 3 (75/25). On comprend en effet que la fonctionnalité hydroxyle élevée des sucres hydrogénés est nécessaire à la formation d'un réseau polyester thermodurci.

La présente invention a donc pour but d'améliorer les propriétés mécaniques, et notamment la reprise d'épaisseur, de produits isolants légers à base de laine minérale liée par des liants verts, biosourcés, contenant des sucres hydrogénés.

Ce but a été atteint grâce à une composition aqueuse de liant pour produits isolants à base de laine minérale, comprenant

(a) au moins un glucide choisi parmi les sucres réducteurs, les sucres non-réducteurs, les sucres hydrogénés et un mélange de ceux-ci, la proportion de sucres hydrogénés dans le glucide étant comprise entre 25 et 100 % en poids,
(b) au moins un acide polycarboxylique monomère ou un sel ou anhydride d'un tel acide, l'acide polycarboxylique monomère représentant de 35 à 75 % en poids, rapporté à la somme des composants (a), (b) et (c), et
(c) de l'isorbide,

le rapport en poids isosorbide/glucide étant compris entre 0,1 et 3,0, de préférence entre 0,2 et 2,0, plus préférentiellement entre 0,3 et 1,5.

Elle a également pour objet un procédé de fabrication d'un produit isolant à base de laine minérale comprenant

- l'application d'une telle composition aqueuse de liant sur des fibres de laine minérale,
- la collecte des fibres de laine minérale encollées de la composition aqueuse de liant sous forme d'un matelas de fibres minérales encollées,
- le chauffage du matelas de fibres jusqu'à durcissement de la composition de liant et formation d'un liant polyester infusible et insoluble.

Enfin elle a pour objet des produits isolants acoustique et/ou thermique susceptibles d'être obtenus par un tel procédé qui se distinguent par une excellente reprise en épaisseur après plusieurs semaines de compression.

Dans la présente invention le terme « glucide » (composant (a)) a un sens plus large qu'usuellement, car il englobe non seulement les glucides au sens stricte, c'est-à-dire des hydrates de carbone (oses et osides) de formule

$$C_n(H_2O)_p$$

où p = n (oses) ou p = n-1 (osides),

mais également les produits d'hydrogénation de ces hydrates de carbone où le groupe aldéhyde ou cétone a été réduit en alcool.

Ces produits d'hydrogénation sont également appelés alditols, alcools de sucres ou sucres hydrogénés. Le terme glucide englobe également les sucres non-réducteurs constitués de plusieurs motifs glucidiques dont les carbones porteurs de l'hydroxyle hémi-acétalique sont impliqués dans les liaisons osidiques reliant les motifs entre eux.

Le composant (a) de la composition aqueuse de liant selon l'invention peut être constitué uniquement de sucres hydrogénés et être exempt de sucres réducteurs et de sucres non-réducteurs. Ce mode de réalisation est intéressant car il conduit à des produits isolants particulièrement peu colorés. En effet, l'absence de sucres réducteurs et non-réducteurs empêche des réactions de brunissement telles que la réaction de Maillard et la caramélisation.

Par « sucres hydrogénés » on entend l'ensemble des produits résultant de la réduction d'un saccharide (hydrate de carbone) choisi parmi les monosaccharides, disaccharides et oligosaccharides et des mélanges de ces produits.

Ils peuvent être obtenus par hydrogénation catalytique de saccharides. L'hydrogénation peut être effectuée par des méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney.

Le ou les sucres hydrogénés sont choisis de préférence dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol, et les produits d'hydrogénation d'hydrolysats d'amidon ou d'hydrolysats de matières ligno-cellulosiques, notamment d'hémicellulose, en particulier de xylanes et xyloglucanes.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

Les sucres hydrogénés sont avantageusement choisis parmi les produits d'hydrogénation de monosaccharides, disaccharides, oligosaccharides et leur mélanges.

On utilisera de manière particulièrement préférée un sucre hydrogéné choisi dans le groupe formé par le maltitol, le xylitol, le sorbitol et les produits d'hydrogénation d'hydrolysats d'amidon ou d'hydrolysats de matières ligno-cellulosiques.

De préférence, le sucre hydrogéné ou le mélange de sucres hydrogénés est constitué majoritairement, c'est-à-dire à plus de 50 % en poids, de maltitol.

Dans un autre mode de réalisation, le composant glucidique (a) peut contenir jusqu'à 75 % en poids d'un ou plusieurs sucres réducteurs et/ou non-réducteurs, en plus du ou des sucres hydrogénés qui représentent au moins 25 % en poids du composant (a). Les produits isolants à base de laine minérale obtenus avec une composition d'encollage présentant une certaine teneur en sucres réducteurs ou non-réducteurs sont relativement plus colorés, mais peuvent présenter un réel intérêt économique lié au faible coût des sucres réducteurs ou de mélanges de sucres incomplètement hydrogénés.

La teneur en sucres hydrogénés du glucide (composant (a)) est de préférence au moins égale à 30 % en poids, en particulier au moins égale à 50 % en poids, et idéalement au moins égale à 70 % en poids, voire plus de 95 % en poids.

Les sucres réducteurs englobent les oses (monosaccharides) et osides (disaccharides et oligosaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucre réducteur.

Les sucres réducteurs sont de préférence choisis parmi les monosaccharides tels que le glucose, le galactose, le mannose et le fructose, les disaccharides tels que le lactose, le maltose, l'isomaltose et le cellobiose, et les hydrolysats d'amidon ou de matières lignocellulosiques décrits ci-dessus. On utilisera de préférence le glucose et le fructose, en particulier le glucose.

Les sucres non-réducteurs sont de préférence les diholosides tels que le tréhalose, les isotréhaloses, le saccharose et les isosaccharoses. Le saccharose est particulièrement préféré.

Le composant (a) et le composant (c) représentent ensemble avantageusement de 30 à 70 % en poids, de préférence de 40 à 60 % en poids des matières sèches de la composition d'encollage.

Le ou les acides polycarboxyliques utilisés dans la présente invention en tant que composant (b) sont des acides polycarboxyliques monomères. Autrement dit, dans la présente invention ce terme n'englobe pas les polymères obtenus par polymérisation d'acides carboxyliques monomères, tels que les homopolymères ou copolymères d'acide acrylique ou d'acide méthacrylique.

On utilisera de préférence des acides polycarboxyliques choisis dans le groupe constitué des acides dicarboxyliques, acides tricarboxyliques et acides tétracarboxyliques.

L'acide polycarboxylique peut être choisi par exemple dans le groupe d'acides suivants : acide oxalique, acide malonique, acide succinique, acide glutarique, acide adipique, acide pimélique, acide subérique, acide azelaïque, acide sébacique, acide malique, acide tartrique, acide tartronique, acide aspartique, acide glutamique, acide fumarique, acide itaconique, acide maléique, acide traumatique, acide camphorique, acide phtalique, acide tétrahydrophtalique, acide chlorendique, acide isophtalique, acide téréphtalique, acide mésaconique, acide citraconique, acide citrique, acide tricarballylique, acide 1,2,4-butanetricarboxylique, acide aconitique, acide hémimellitique, acide triméllitique, acide trimésique, acide 1,2,3,4-butanetétracarboxylique et acide pyroméllitique.

L'acide polycarboxylique particulièrement préféré est l'acide citrique.

La Demanderesse a fait de nombreux essais pour déterminer les proportions respectives de composants hydroxylés (composants (a) et (c)) et d'acide polycarboxylique qui aboutissent à des liants qui, à l'état réticulé, confèrent au produit final de laine de verre les meilleures propriétés mécaniques, notamment après compression ou après vieillissement accéléré dans des conditions humides.

Ces essais ont montré que le composant (b), à savoir l'acide polycarboxylique monomère, représente de 35 à 75 % en poids, de préférence de 40 à 70 % en poids, et en particulier de 45 à 65 % en poids, rapporté à la somme des composants (a), (b) et (c).

L'isorbide résulte de la double déshydration du sorbitol et correspond à la formule

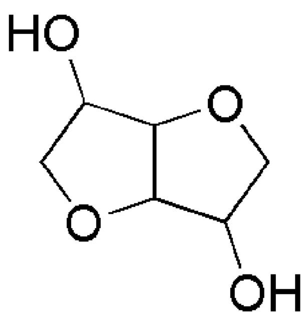

Il est disponible sous la dénomination Polysorb® par la société Roquette, France.

Comme indiqué ci-dessus, les compositions de liant de la présente invention contiennent en outre de préférence

une quantité efficace d'un catalyseur capable d'accélérer la réaction d'estérification entre les groupes hydroxyle des composants (a) et (c) et les fonctions acide ou anhydride du composant (b).

Ce catalyseur est de préférence l'hypophosphite de sodium ou l'acide hypophosphoreux, qui sont utilisés par exemple en une quantité comprise entre 0,5 et 10 % en poids, de préférence entre 1,0 et 5 % en poids, rapporté au poids sec des composants (a), (b) et (c).

Les compositions de liant de la présente invention contiennent en outre de préférence un ou plusieurs additifs connus, utilisés couramment dans le domaine technique des laines minérales. Ces additifs sont par exemple des additifs anti-poussières (huiles minérales) et des silicones, réactifs ou non, qui ont pour fonction d'augmenter le caractère hydrophobe des produits d'isolation.

Les compositions de liant de la présente invention au moment où elles sont appliquées par pulvérisation sur les fibres minérales, immédiatement après la formation de ces dernières, sont des solutions aqueuses assez diluées ayant une teneur en matières solides comprises entre environ 3 et 20 % en poids, de préférence entre 4 et 10 % en poids.

Pour l'obtention de produits de bonne qualité, il est nécessaire que la composition d'encollage présente une bonne aptitude à la pulvérisation et puisse se déposer sous forme d'un mince film à la surface des fibres afin de les lier efficacement. L'aptitude à la pulvérisation de la composition d'encollage est directement liée à la possibilité de diluer une composition de liant concentrée, avec une grande quantité d'eau. La composition d'encollage diluée doit être une solution, stable dans le temps, qui ne donne pas lieu à des phénomènes de démixtion.

On caractérise l'aptitude à la dilution par la « diluabilité » que l'on définit comme étant le volume d'eau déionisée qu'il est possible, à une température donnée, d'ajouter à une unité de volume de la composition de liant avant l'apparition d'un trouble permanent. On considère généralement qu'une composition de liant est apte à être utilisée en tant qu'encollage lorsque sa diluabilité est égale ou supérieure à 1000 %, à 20°C.

Les compositions de liant de la présente invention ont une diluabilité supérieure à 2000 %.

Après encollage des fibres et formation d'un matelas sur un tapis collecteur, le produit non durci passe de manière connue par une étuve thermostatée à une température supérieure à 150 °C, de préférence supérieure à 200 °C et inférieure à 250 °C. La durée de séjour du matelas dans l'étuve est typiquement comprise entre 5 et 30 minutes.

Les produits isolants obtenus par le procédé de la présente invention sont des produits dits « légers », c'est-à-dire des produits qui se présentent sous forme de matelas souples qui sont fortement comprimés et enroulés avant emballage.

Leur épaisseur, déterminée selon la norme EN 823, est typiquement comprise entre 2 et 40 cm, de préférence entre 4 et 30 cm, en particulier entre 10 et 20 cm.

Leur masse volumique est typiquement comprise entre 5 et 60 kg/$m^3$, de préférence entre 8 et 30 kg/$m^3$, de préférence entre 10 et 15 kg/$m^3$.

**Exemples**

Les compositions de liant présentées au tableau 1 sont préparées par introduction des constituants dans un récipient contenant de l'eau, sous une agitation vigoureuse. L'extrait sec des compositions d'encollage est égal à 5 % en poids.

Les compositions d'encollage sont utilisées pour former des produits d'isolation à base de laine de verre.

On fabrique de la laine de verre par la technique de la centrifugation interne dans laquelle la composition de verre fondu est transformée en fibres au moyen d'un outil dénommé assiette de centrifugation, comprenant un panier formant la chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage. La finesse des fibres de verre, mesurée par la valeur de leur micronaire dans les conditions décrites dans la demande de brevet FR 2 840071, est égale à 15 l/min. Il existe une relation de correspondance entre la valeur micronaire et le diamètre moyen des fibres.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande ayant une largeur de 2,40 m, équipé de caissons d'aspiration internes qui retiennent la laine minérale sous forme d'un feutre ou d'une nappe à la surface du convoyeur. Le convoyeur passe ensuite dans une étuve maintenue à 240°C où les constituants de l'encollage polymérisent pour former un liant. Le produit isolant obtenu présente une masse volumique égale à 10,6 kg/$m^3$, une épaisseur d'environ 144 mm immédiatement après la fabrication et une perte au feu égale à 5,2 %.

La reprise d'épaisseur des produits ainsi formés est déterminée de la manière suivante :
Pour chaque essai on détermine l'épaisseur ($E_{initiale}$) de huit panneaux de laine minérale identiques (120 cm x 60 cm) conformément à la norme EN823.

Ces huit panneaux sont ensuite empilés et comprimés entre 2 panneaux de bois avec un rapport de compression

de 8.

Après décompression chaque panneau est tenu verticalement à une distance de 450 mm du sol puis lâché. Après 5 min d'attente, les mesures d'épaisseur sont réalisées en différents points du panneau à l'aide d'une pointe graduée introduite dans l'épaisseur du panneau (EN823).

Pour la détermination de la reprise d'épaisseur au moment de la fabrication, la décompression se fait quelques minutes seulement après compression.

Pour la détermination de la reprise d'épaisseur après un mois de compression, la décompression se fait au bout d'un mois de conservation de l'échantillon à température ambiante et humidité relative ambiante et à l'état comprimé.

La reprise d'épaisseur est le rapport de l'épaisseur mesurée après décompression à l'épaisseur initiale ($E_{initiale}$) mesurée avant compression.

On fixe arbitrairement à 100 % la reprise d'épaisseur $RE_{ref}$ constatée pour l'échantillon de référence (laine minérale liée par résine phénolique) au moment de la fabrication. Au tableau 1 toutes les autres reprises d'épaisseur sont exprimées en pourcentage par rapport à cette $RE_{ref}$.

Les températures de transition vitreuse ($T_g$) sont mesurées par analyse calorimétrique différentielle (DSC) après cuisson de la résine en coupelle d'aluminium à 215 °C pendant 20 minutes.

Tableau 1

| | Ex. Comp. | Ex.1 | Ex.2 | Référence |
|---|---|---|---|---|
| Résine phénolique | - | - | - | 100 |
| Acide citrique | 52 | 52 | 52 | - |
| Maltitol | 48 | 34 | 24 | - |
| Isosorbide | - | 14 | 24 | - |
| Hypophosphite de sodium | 5 | 5 | 5 | - |
| Huile minérale (HW88, SASOL) | 8 | 8 | 8 | 8 |
| Aminosilane (A1100, Momentive) | 0,5 | 0,5 | 0,5 | 0,5 |
| Silicone (BS5137, WACKER) | 0,5 | 0,5 | 0,5 | 0,5 |
| Reprise d'épaisseur (%) | | | | |
| Au moment de la fabrication | 101 | 103 | 105 | 100 |
| Après 1 mois | 61 | 76 | 81 | 87 |
| Température de transition vitreuse (°C) | 120 | 100 | 56 | n.d. |

On constate que le produit de référence, lié par un liant à base de résine phénolique, perd 13 % de sa reprise d'épaisseur après un mois de compression. L'exemple comparatif, préparé avec une composition de liant contenant comme seuls réactifs un sucre hydrogéné et de l'acide citrique, a une reprise d'épaisseur au moment de la fabrication sensiblement identique à celle du produit de référence. Après un mois de stockage à l'état comprimé, on constate une importante dégradation de la capacité du produit à retrouver son épaisseur. La reprise d'épaisseur du produit comparatif est inférieure d'environ 30 % à celle du produit de référence.

Pour les deux exemples selon l'invention on observe une amélioration de la reprise d'épaisseur. Cette amélioration augmente avec la proportion d'isosorbide.

## Revendications

**1.** Composition aqueuse de liant pour produits isolants à base de laine minérale, comprenant

(a) au moins un glucide choisi parmi les sucres réducteurs, les sucres non-réducteurs, les sucres hydrogénés et un mélange de ceux-ci, la proportion de sucres hydrogénés dans le glucide étant comprise entre 25 et 100 % en poids,
(b) au moins un acide polycarboxylique monomère ou un sel ou anhydride d'un tel acide, l'acide polycarboxylique monomère représentant de 35 à 75 % en poids, rapporté à la somme des composants (a), (b) et (c), et
(c) de l'isosorbide,

le rapport en poids isosorbide/glucide étant compris entre 0,1 et 3,0, de préférence entre 0,2 et 2,0, plus préférentiellement entre 0,3 et 1,5.

2. Composition aqueuse de liant selon la revendication 1, **caractérisée par le fait que** le glucide contient au moins 30 % en poids, de préférence au moins 50 % en poids, et en particulier au moins 70 % en poids de sucres hydrogénés.

3. Composition aqueuse de liant selon l'une des revendications précédentes, **caractérisée par le fait que** le sucre hydrogéné est choisi parmi les produits d'hydrogénation des monosaccharides, disaccharides, oligosaccharides et leurs mélanges.

4. Composition aqueuse de liant selon l'une quelconque des revendications précédentes, **caractérisée par le fait que** le sucre hydrogéné est choisi dans le groupe formé de sorbitol, xylitol et maltitol.

5. Composition aqueuse d'encollage selon l'une quelconque des revendications 1 à 3, **caractérisée par le fait que** le sucre hydrogéné est un produit d'hydrogénation d'un hydrolysat d'amidon ou d'un hydrolysat de matières lignocellulosiques.

6. Composition aqueuse de liant selon l'une quelconque des revendications précédentes, **caractérisée par le fait que** le glucide est exempt de sucres réducteurs et/ou de sucres non-réducteurs.

7. Composition aqueuse de liant selon l'une quelconque des revendications précédentes, **caractérisée par le fait qu'**elle contient de 40 à 70 % en poids, et en particulier de 45 à 65 % en poids d'acide polycarboxylique monomère, rapporté à la somme des composants (a), (b) et (c).

8. Composition aqueuse d'encollage selon l'une des revendications précédentes, **caractérisé par le fait que** l'acide polycarboxylique est l'acide citrique.

9. Composition aqueuse de liant selon l'une quelconque des revendications précédentes, **caractérisé par le fait qu'**elle contient en outre de 0,5 à 10 % en poids, de préférence de 1,0 à 5 % en poids, rapporté au poids sec des composants (a), (b) et (c), d'un catalyseur d'estérification, de préférence un catalyseur choisi parmi l'hypophosphite de sodium et l'acide hypophosphoreux.

10. Procédé de fabrication d'un produit isolant à base de laine minérale, comprenant

- l'application d'une composition aqueuse de liant selon l'une quelconque des revendications précédentes sur des fibres de laine minérale,
- la collecte des fibres de laine minérale encollées de la composition aqueuse de liant sous forme d'un matelas de fibres minérales encollées,
- le chauffage du matelas de fibres jusqu'à durcissement de la composition de liant et formation d'un liant polyester infusible et insoluble.

11. Produit isolant acoustique et/ou thermique obtenu par le procédé selon la revendication 10.

12. Produit isolant acoustique et/ou thermique selon la revendication 11, **caractérisé par le fait qu'**il présente une masse volumique comprise entre 5 et 60 kg/m$^3$, de préférence entre 8 et 30 kg/m$^3$, de préférence entre 10 et 15 kg/m$^3$.

## Patentansprüche

1. Wässrige Bindemittelzusammensetzung für Dämmprodukte auf Basis von Mineralwolle, umfassend

(a) mindestens ein Kohlenhydrat, das aus reduzierenden Zuckern, nicht reduzierenden Zuckern, hydrierten Zuckern und einer Mischung davon ausgewählt ist, wobei der Anteil an hydrierten Zuckern in dem Kohlenhydrat zwischen 25 und 100 Gew.-% beträgt,
(b) mindestens eine monomere Polycarbonsäure oder ein Salz oder Anhydrid einer solchen Säure, wobei die monomere Polycarbonsäure bezogen auf die Summe der Komponenten (a), (b) und (c) von 35 bis 75 Gew.-% ausmacht, und
(c) Isosorbid,

wobei das Gewichtsverhältnis Isosorbid/Kohlenhydrat zwischen 0,1 und 3,0, vorzugsweise zwischen 0,2 und 2,0 und mehr bevorzugt zwischen 0,3 und 1,5 liegt.

2. Wässrige Bindemittelzusammensetzung nach Anspruch 1,
**dadurch gekennzeichnet, dass** das Kohlenhydrat mindestens 30 Gew.-%, vorzugsweise mindestens 50 Gew.-% und insbesondere mindestens 70 Gew.-% hydrierte Zucker enthält.

3. Wässrige Bindemittelzusammensetzung nach einem der vorstehenden Ansprüche, **dadurch gekennzeichnet, dass** der hydrierte Zucker aus den Hydrierungsprodukten von Monosacchariden, Disacchariden, Oligosacchariden und ihren Mischungen ausgewählt ist.

4. Wässrige Bindemittelzusammensetzung nach einem der vorstehenden Ansprüche, **dadurch gekennzeichnet, dass** der hydrierte Zucker aus der Gruppe ausgewählt ist, die aus Sorbitol, Xylitol und Maltitol gebildet ist.

5. Wässrige Leimungszusammensetzung nach einem der Ansprüche 1 bis 3, **dadurch gekennzeichnet, dass** der hydrierte Zucker ein Hydrierungsprodukt eines Stärkehydrolysats oder eines Hydrolysats von Lignocellulosematerialien ist.

6. Wässrige Bindemittelzusammensetzung nach einem der vorstehenden Ansprüche, **dadurch gekennzeichnet, dass** das Kohlenhydrat frei von reduzierenden Zuckern und/oder nicht reduzierenden Zuckern ist.

7. Wässrige Bindemittelzusammensetzung nach einem der vorstehenden Ansprüche, **dadurch gekennzeichnet, dass** sie bezogen auf die Summe der Komponenten (a), (b) und (c) zu 40 bis 70 Gew.-% und insbesondere zu 45 bis 65 Gew.-% die monomere Polycarbonsäure enthält.

8. Wässrige Leimungszusammensetzung nach einem der vorstehenden Ansprüche, **dadurch gekennzeichnet, dass** die Polycarbonsäure Zitronensäure ist.

9. Wässrige Bindemittelzusammensetzung nach einem der vorstehenden Ansprüche, **dadurch gekennzeichnet, dass** sie ferner bezogen auf das Trockengewicht der Komponenten (a), (b) und (c) zu 0,5 bis 10 Gew.-%, vorzugsweise zu 1,0 bis 5 Gew.-%, einen Veresterungskatalysator enthält, vorzugsweise einen Katalysator, der aus Natriumhypophosphit und Phosphinsäure ausgewählt ist.

10. Verfahren zum Herstellen eines Dämmprodukts auf Basis von Mineralwolle, umfassend

- das Aufbringen einer wässrigen Bindemittelzusammensetzung nach einem der vorstehenden Ansprüche auf Mineralwollefasern,
- das Sammeln von Mineralwollefasern, die mit der wässrigen Bindemittelzusammensetzung geleimt sind, in Form einer Matte von geleimten Mineralfasern,
- das Erwärmen der Matte von Fasern bis zur Härtung der Bindemittelzusammensetzung und Bildung eines nicht schmelzbaren und nicht löslichen Polyesterbindemittels.

11. Schall- und/oder Wärmedämmprodukt, das durch das Verfahren nach Anspruch 10 erhalten wird.

12. Schall- und/oder Wärmedämmprodukt nach Anspruch 11,
**dadurch gekennzeichnet, dass** es eine Dichte zwischen 5 und 60 kg/$m^3$, vorzugsweise zwischen 8 und 30 kg/$m^3$, vorzugsweise zwischen 10 und 15 kg/$m^3$ aufweist.

## Claims

1. An aqueous binder composition for mineral wool-based insulation products, comprising

(a) at least one carbohydrate selected from reducing sugars, non-reducing sugars, hydrogenated sugars and a mixture thereof, the proportion of hydrogenated sugars in the carbohydrate being comprised between 25 and 100% by weight,
(b) at least one monomeric polycarboxylic acid or a salt or anhydride of such an acid, the monomeric polycarboxylic acid representing from 35 to 75% by weight, based on the sum of components (a), (b) and (c), and
(c) isosorbide,

the isosorbide/carbohydrate weight ratio being comprised between 0.1 and 3.0, preferably between 0.2 and 2.0,

more preferentially between 0.3 and 1.5.

2. The aqueous binder composition as claimed in claim 1, **characterized by** the fact that the carbohydrate contains at least 30% by weight, preferably at least 50% by weight, and in particular at least 70% by weight of hydrogenated sugars.

3. The aqueous binder composition as claimed in one of the preceding claims, **characterized by** the fact that the hydrogenated sugar is selected from the hydrogenation products of monosaccharides, disaccharides, oligosaccharides and mixtures thereof.

4. The aqueous binder composition as claimed in any one of the preceding claims, **characterized by** the fact that the hydrogenated sugar is selected from the group consisting of sorbitol, xylitol and maltitol.

5. The aqueous bonding composition as claimed in any one of claims 1 to 3, **characterized by** the fact that the hydrogenated sugar is a hydrogenation product of a starch hydrolysate or of a hydrolysate of lignocellulosic materials.

6. The aqueous binder composition as claimed in any one of the preceding claims, **characterized by** the fact that the carbohydrate is free of reducing sugars and/or non-reducing sugars.

7. The aqueous binder composition as claimed in any one of the preceding claims, **characterized by** the fact that it contains from 40 to 70% by weight, and in particular from 45 to 65% by weight of monomer polycarboxylic acid, based on the sum of components (a), (b) and (c).

8. The aqueous bonding composition as claimed in one of the preceding claims, **characterized by** the fact that the polycarboxylic acid is citric acid.

9. The aqueous binder composition as claimed in any one of the preceding claims, **characterized by** the fact that it further contains 0.5 to 10% by weight, preferably 1.0 to 5% by weight, based on the dry weight of components (a), (b) and (c), of an esterification catalyst, preferably a catalyst selected from sodium hypophosphite and hypophosphorous acid.

10. A process for the manufacture of a mineral wool-based insulation product, comprising

- applying an aqueous binder composition as claimed in any one of the preceding claims on mineral wool fibers,
- collecting the mineral wool fibers bonded with the aqueous binder composition in the form of a mat of bonded mineral fibers,
- heating the fiber mat until the binder composition is cured and an infusible and insoluble polyester binder is formed.

11. An acoustic and/or thermal insulation product obtained by the process as claimed in claim 10.

12. The acoustic and/or thermal insulation product as claimed in claim 11, **characterized by** the fact that it has a density comprised between 5 and 60 $kg/m^3$, preferably between 8 and 30 $kg/m^3$, preferably between 10 and 15 $kg/m^3$.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20110223364 A
- WO 2010029266 A
- WO 2013014399 A
- FR 2840071